Europäisches Patentamt

European Patent Office

Office européen des brevets

(11) Numéro de publication: **0 296 052**
**A1**

## DEMANDE DE BREVET EUROPEEN

(21) Numéro de dépôt: 88401465.5

(22) Date de dépôt: 14.06.88

(51) Int. Cl.⁴: **C 08 J 9/32**
C 08 K 7/22, C 08 L 79/04

(30) Priorité: 17.06.87 FR 8708449

(43) Date de publication de la demande:
21.12.88 Bulletin 88/51

(84) Etats contractants désignés:
AT BE CH DE ES FR GB IT LI LU NL SE

(71) Demandeur: ALSTHOM
38, avenue Kléber
F-75784 Paris Cédex 16 (FR)

(72) Inventeur: Anton, Alain
rue de Beauregard
Chaponnay F-69360 St Symphorien d'Ozon (FR)

Dubuisson, Alain
Villa n. 30 Résidence Le Garel
F-69530 Brignais (FR)

(74) Mandataire: Weinmiller, Jürgen et al
Lennéstrasse 9 Postfach 24
D-8133 Feldafing (DE)

(54) Matériau à structure mousse résistant à la chaleur.

(57) Matériau à structure mousse résistant à la chaleur constitué à partir de polymères d'oxazolidones et d'isocyanurates. Il comporte des charges creuses ou poreuses dispersées dans les polymères.

**Description**

## Matériau à structure mousse résistant à la chaleur

La présente invention concerne un matériau à structure mousse résistant à la chaleur.

On a déjà proposé dans un article de P I Kordemenos, K.C. Frisch et J.E. Kresta, Journal of Coating Technology, vol. 55, n° 700, 1983, p.49-61, de fabriquer des mousses à base de polymères d'oxazolidones et d'isocyanurates par réaction de polyépoxydes sur des polyisocyanates en présence d'oxyde de phosphine. Toutefois de telles mousses ne présentent pas une masse spécifique apparente suffisamment faible, leur conductivité thermique est encore relativement élevée et leurs propriétés mécaniques, notamment leur résistance à la compression, sont insuffisantes pour leur emploi comme calorifuges, isolants acoustiques ou structures résistant à de hautes pressions.

Le document US-A-3993608 décrit des résines mousses du type poly (méthane-isocyanurate) contenant des microsphères de verre creuses de diamètre 5 à 500 micromètres, additionnées d'un agent stabilisant de la mousse et d'un catalyseur de trimérisation de l'isocyanate, tel qu'un sel alcalin d'acide carboxylique, un hydroxyle ou alcoxyde alcalin, un hydroxyde d'ammonium quaternaire, éventuellement additionnés d'une amine tertiaire aliphatique. Toutefois de telles résines possèdent des liaisons chimiques peu stables à la chaleur, et ne présentent donc pas une résistance thermique suffisante.

La présente invention a pour but de procurer un matériau à structure mousse utilisable à une température de 200°C en régime continu, sans altération sensible de ses propriétés d'isolation thermique ou acoustique ni de ses propriétés mécaniques, et d'une manipulation facile, ces derniers termes signifiant que sa mise en oeuvre est possible dès la température ambiante, qu'elle ne nécessite aucune source de chaleur particulière et permet sa fabrication en grande série.

Le matériau selon l'invention est caractérisé en ce qu'il comporte des charges creuses ou poreuses dispersées dans les polymères.

Il répond en outre de préférence à au moins l'une des caractéristiques suivantes :
- Les polymères d'oxazolidones et d'isocyanurates sont obtenus par réaction de résines polyisocyanates sur des résines polyépoxydes en présence d'un catalyseur de formation des cycles isocyanurates et oxazolidones à basse température.
- Les résines polyépoxydes sont des résines d'équivalent époxyde inférieur à 600 g par équivalent.
- Les résines polyisocyanates sont des polyisocyanates aromatiques de viscosité inférieure à 1500 mPa.s à 25°C.
- Le rapport équivalent isocyanate/équivalent époxyde est compris entre 1,5 et 30, et de préférence entre 2 et 2,3.
- Le catalyseur est un produit azoté, de préférence une amine tertiaire aliphatique.
- Les charges creuses ou poreuses sont des matériaux expansés minéraux contenant une très faible quantité d'eau libérable par chauffage et présentant une perte de poids inférieure à 5% après maintien pendant 30 jours à 230°C.
- Les matériaux expansés sont des microsphères creuses ou des microbilles de verre.
- les charges creuses ou poreuses ont été traitées par un agent tensioactif pour améliorer leurs liaisons avec les polymères.

Sans que cela constitue une limitation de l'objet de l'invention, le matériau de l'invention présente habituellement des masses spécifiques apparentes entre 200 et 850 Kg/m³, mais celles-ci sont de préférence comprises entre 400 et 650 Kg/m³.

On peut obtenir des matériaux de masse spécifique inférieure à 200 Kg/m³, mais dans ce cas leur stabilité thermique n'est pas très bonne. On peut également fabriquer des matériaux de masses spécifiques apparentes supérieures à 850 Kg/m³, mais celles-ci sont trop élevées pour le plupart des applications possibles.

Comme résines polyépoxydes de départ dans la fabrication des matériaux de l'invention, on peut utiliser des bisphénols A-diglycidyléthers, des bisphénols F-diglycidyléthers, des résorcinol-diglycidyléthers, des époxydes cycloaliphatiques, ainsi que des composés époxydes hétérocycliques à base d'hydantoïne, ou des mélanges de tels composés. D'autres époxydes utilisables sont mentionnés dans le traité "Handbook of Epoxy Resins", de H. Lee et K. Neville, Mc Graw Hill Book Co, 1967. Comme indiqué ci-dessus, les époxydes les plus avantageux sont ceux de faible masse moléculaire, présentant un équivalent époxyde inférieur à 600 par équivalent.

Les époxydes monofonctionnels donnent des polymères de résistance thermique relativement faible, et ne sont donc pas avantageux.

Comme polyisocyanates, on peut utiliser des polyisocyanates aliphatiques (tels que le tétraméthylène diisocyanate, l'hexaméthylène diisocyanate, le ω , ω' diisocyanatodipropyléther, le 2,6 diisocyanatocaproïque-esteracide, le 1,6,11-triisocyanatoundécane), des polyisocyanates cycloaliphatiques tels que le bis (isocyanatométhyl) cyclohexane, le bis-(isocyanatoéthyl) cyclohexane, le 1-isocyanato-3-isocyanatométhyl -3,5,5-triméthylcyclohexane et le bis-(4-isocyanatocyclohexyl)méthane, des polyisocyanates aromatiques tels que le xylylène diisocyanate ou le bis (2-isocyanatométhyl) benzène, ces composés pouvant être utilisés seuls ou en mélanges.

On peut employer également les mélanges d'isomères du diphénylméthane diisocyanate ou du toluylène

0 296 052

diisocyanate, ou encore l'isophorone diisocyanate, ainsi que le triémethyl hexaméthylène diisocyanate, ou des prépolymères des isocyanates indiqués ci-dessus.

Comme indiqué ci-dessus, on emploiera de préférence des polyisocyanates aromatiques de viscosité inférieure à 1500 m Pa. s à 25°C. Les polyisocyanates monofonctionnels, abaissant la résistance thermique du produit final, ne sont pas avantageux.

On peut utiliser de nombreux catalyseurs, tels que les amines, les imidazols, les sels d'ammonium, les sels métalliques, des complexes organométalliques, notamment les bases ou les acides de Lewis. Toutefois, les amines tertiaires aliphatiques conviennent spécialement bien, car elles sont notamment plus réactives en général que les amines aromatiques, et permettent dès lors des vitesses de fabrication plus élevées, tout en procurant des matériaux présentant d'excellentes propriétés thermiques.

Les charges creuses poreuses seront de préférence des charges minérales, quoique l'on puisse envisager l'emploi de billes creuses en polymère organique, tel qu'une résine phénolique. On peut utiliser notamment comme matériaux minéraux des aluminosilicates, des borosilicates, des pierres ponces, des vermiculites et perlites, des silices, des argiles, des alumines et des céramiques, en respectant cependant de préférence la condition qu'ils soient stables à haute température, c'est-à-dire présentent des pertes de poids inférieures à 5% après maintien à 230°C pendant 30 jours.

En fonction des applications particulières envisagées, on peut ajouter en outre aux compositions de départ pour la fabrication des matériaux divers adjuvants, tels que des colorants, des antioxydants, des ignifugeants, des charges fibreuses, etc....

Du fait de la viscosité très faible à 20°C des polyépoxydes et polyisocyanates de départ, il n'est pas nécessaire de les dissoudre dans des solvants, ce qui améliore les propriétés des matériaux mousses obtenus, car des solvants résiduels présents même en très faibles quantités sont sources de dégradation lors d'une utilisation prolongée à température élevée. On peut en outre leur ajouter une proportion très importante de charges creuses ou poreuses. Ces composés réagissant de façon exothermique, il est inutile de chauffer le mélange.

Les fonctions polyépoxydes et polyisocyanates peuvent réagir entre elles en formant des fonctions dicarboimides avec dégagement d'anhydride carbonique, ce qui allège encore le produit final obtenu et améliore la résistance au feu déjà intrinsèquement élevée, du fait de la libération de l'anhydride carbonique sous l'effet de la chaleur.

Les mousses obtenues à partir du mélange réactionnel peuvent être mises en forme par différents procédés, tels que la coulée, la compression, l'injection.

Il est décrit ci-après, à titre d'exemple, une opération de fabrication d'une mousse résistante à la chaleur et les propriétés de différents panneaux à structure mousse selon l'invention.

On prépare en premier lieu un mélange contenant 175g de polyisocyanate à base de méthylène diphényldiisocyanate, d'équivalent isocyanate de 130 à 140, de 50g de polyépoxyde à base de diglycidyléther de bisphénol A, d'équivalent époxy 180 à 190, et de 50g de charges (l'une des charges définies dans le tableau ci-après). L'ensemble est homogénéisé à l'aide d'un disperseur rotatif.

On prépare ensuite un mélange de 10g du même polyépoxyde et de 1g de benzyldiméthylamine (catalyseur). On met en présence sous agitation et sans chauffage les deux mélanges, les proportions pondérales globales dans la masse réactionnelle étant alors de 57,85% de polyisocyanate, de 24,79% de polyépoxyde, de 16,53% de charge et de 0,83% de catalyseur. On observe que la réaction est accélérée par rapport à l'emploi d'un mélange réactionnel exempt de charge. Selon la nature de la charge, on observe les résultats suivants :

3

| REFERENCES | 1 | 2 | 3 | 4 | 5 | 6 | 7 | 8 |
|---|---|---|---|---|---|---|---|---|
| Caractéristique de la charge<br>– nature | néant | micro ballons creux de verre | micro billes creuses | micro sphère de verre cellulaire | micro sphère de verre cellulaire | micro sphère de verre cellulaire | granulat de verre cellulaire | vermiculite expansée |
| – masse volumique sèche (kg/m³) | | 140 | 380 | 80 | 120 | 130 | 200 | 100 |
| – densité réelle | | 0,28 | 0,70 | – | 0,21 | 0,22 | 0,35 | 0,30 |
| – conductivité thermique ( en W/m.°C) | | 0,05 | 0,09 | – | 0,08 | 0,08 | 0,07 | 0,09 |
| Début de l'exothermie après mélange | 17 mn | 12 mn | 23 mn | 16 mn | 23 mn | 22 mn | 20 mn | 17 mn |
| augmentation maximale de la température | 44° C | 158° C | 142° C | 159° C | 157° C | 148° C | 99° C | 153° C |
| Densité du matériau | 1,25 | 0,27 | 0,61 | 0,27 | 0,53 | 0,68 | 0,68 | 0,26 |
| Résistance en compression (MPa) | | 4 | 23 | 5 | 28 | 29 | 27 | 4 |
| % perte de poids après 30 jours à 200° C | | 7,5 | 2,2 | 9,8 | 1,1 | 0,9 | 2,4 | 6,6 |
| % perte de poids après 30 jours à 230° C | | 13,3 | 6,5 | – | 3,2 | 3,1 | 6,9 | 13,7 |

On peut aussi préparer les mousses de façon différente. On peut introduire le mélange des résines de départ dans un moule fermé contenant déjà la charge. Par gravité, la résine s'écoule jusqu'au fond et le trop-plein de résine s'échappe par un évent supérieur lors du moussage. On peut également opérer par injection des résines sous pression avec remontée sous vide dans un moule étanche contenant déjà les charges.

Le matériau selon l'invention est applicable à la fabrication de structures résistant à de très hautes pressions, notamment de structures sous-marines, de structures aéroportées, de cloisons ou panneaux d'isolation thermique ou acoustique, de colles, de mastics, etc...

**Revendications**

1/ Matériau à structure mousse résistant à la chaleur constitué à partir de polymères d'oxazolidones et d'isocyanurates, caractérisé en ce qu'il comporte des charges creuses ou poreuses dispersées dans les polymères.

2/ Matériau selon la revendication 1, caractérisé en ce que les polymères d'oxazolidones et d'isocyanurates sont obtenus par réaction de résines polyisocyanates sur des résines polyépoxydes en présence d'un catalyseur de formation des cycles isocyanurates et oxazolidones à basse température.

3/ Matériau selon la revendication 2, caractérisé en ce que les résines polyépoxydes sont des résines d'équivalent époxyde inférieur à 600g par équivalent.

4/ Matériau selon les revendications 2 ou 3, caractérisé en ce que les résines polyisocyanates sont des polyisocyanates aromatiques de viscosité inférieure à 1500 mPa.s à 25°C.

5/ Matériau selon l'une des revendications 2 à 4, caractérisé en ce que le rapport équivalent isocyanate/équivalent époxyde est compris entre 1,5 et 30, et de préférence entre 2 et 2, 3.

6/ Matériau selon l'une des revendications 2 à 5, caractérisé en ce que le catalyseur est un produit azoté, de préférence une amine tertiaire aliphatique.

7/ Matériau selon l'une des revendications 1 à 6, caractérisé en ce que les charges creuses ou poreuses sont des matériaux expansés minéraux contenant une très faible quantité d'eau libérable par chauffage et présentant une perte de poids inférieure à 5% après maintien pendant 30 jours à 230°C.

8/ Matériau selon l'une des revendications 1 à 7, caractérisé en ce que les matériaux expansés sont des microsphères creuses ou des microbilles de verre.

9/ Matériau selon les revendications 7 ou 8, caractérisé en ce que les charges creuses ou poreuses ont été traitées par un agent tensioactif pour améliorer leurs liaisons avec les polymères.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 564 651  (MARKERT et al.)<br>* Revendications 1-5,7-15; colonne 2, lignes 35-47; colonne 8, lignes 51-58; colonne 9, lignes 1-57 * | 1,2,6-9 | C 08 J   9/32<br>C 08 K   7/22<br>C 08 L  79/04 |
| A | --- | 4,5 | |
| Y | US-A-3 993 608  (WELLS)<br>* Revendications 1-3,6-8,11; colonne 5, lignes 41-57; colonne 12, lignes 36-56 * | 1,2,7-9 | |
| Y | US-A-4 077 921  (SHARPE et al.)<br>* Revendications 1-3,5,7,9,10; colonne 2, lignes 10-68; colonne 3, lignes 1-10,27-35, colonne 4, lignes 18-31 * | 1,2,6-9 | |
| A | FR-A-2 549 277  (ALSTHOM)<br>* Revendications 1-3,8; page 1, lignes 1-34 * | 1,2,5,6 | |

**DOMAINES TECHNIQUES RECHERCHES (Int. Cl.4)**

C 08 J
C 08 G

Le présent rapport a été établi pour toutes les revendications

| Lieu de la recherche | Date d'achèvement de la recherche | Examinateur |
|---|---|---|
| LA HAYE | 19-08-1988 | OUDOT R. |